# EUROPEAN PATENT APPLICATION

(11) **EP 3 038 371 A1**
(43) Date of publication of application: **29.06.2016**
(21) Application number: 14461602.6
(22) Date of filing: 22.12.2014
(51) Int. Cl.: H04N 21/254, G06Q 30/02, H04N 21/278, H04N 21/478, G06Q 30/06

(54) **Computer system for booking and purchasing services through a television set, an application to make such reservation and a method of making such reservation**

(71) Applicant: Sensi Soft Sp. z o.o., 02-532 Warszawa (PL)
(72) Inventor: Batory, Stefan Dominik, 02-722 Warszawa (PL)
(74) Representative: Sielewiesiuk, Jakub

(57) **Abstract**

The invention relates to an online system for booking and purchasing services through a television set, which includes the server and set-top box such as Android TV which is adapted to receive a TV signal, as well as to communicate with the server and TV receiver, that includes an installed on TV set-top box application capable to communicate with the user through the interface that is displayed on your television and able to communicate with the server, making your request.

Invention also includes communication application installed on your set-top box, such as Android TV and the method of making a reservation.

## Description

The invention relates to an online system for booking and purchasing services through a television set, which includes the server and set-top box such as Android TV which is adapted to receive a TV signal, as well as to communicate with the server and TV receiver.

Invention also includes communication application installed on your set-top box, such as Android TV and the method of making a reservation.

In accordance with our knowledge, there aren't currently any online systems offering the option of making reservations and purchasing services online, in real time on a technical platform such as TV receivers and decoders.

Until recently television allowed only unilateral interaction with users, while today there is a desire to change the status quo. It is being predicted that by 2020 television receivers, to a significant extent, will become dual channel devices (transmitter-receivers, enabling not only passive reception of audiovisual content, but also an active implementation of the tasks such as interactive voting, active participation in the programs, making doctor appointments, shopping etc. Taking into account the technical requirements for the implementation of this type of operation, it is highly probable, that digitization and creation of interaction for television will take place in four basic ways:
- Using devices like the set *-top-box,* supplied by both cable operators (such as *Personal Television by Netia*), internet operators (i.e. UPC *BOX*) and satellite providers (i.e. digital Polsat)
- Using embedded technologies in televisions, so-called *Smart TV-* TVs that are technologically advanced, but because of that more expensive than other available television receivers, which causes that only a very small group can afford their possession
- Using devices such as Android TV, based on open and very well documented system Android OS (used by 60% of mobile phones and tablets)
- Using a game console, such as Microsoft Xbox, Sony PlayStation and Nintendo Wii.

There is a stiff online system competition for the invention, however, they operate on other hardware platforms, in particular as Web pages and applications on devices such as Smartphones (e.g. : Android, iPhone). The following are a few examples:
- StyleSeat (https://www.styleseat.com/) - is a system that offers the option to book visits to specialists in cosmetic industry, especially in the USA. It offers the tools in the form of Web applications and the IOS devices.
- SpaBooker (http://www.spa-booker.com/) - is a system for ordering SPA services. It offers Web application platform and the IOS (iPhone, iPad).
- Mind Body (https://www.mindbodyonline.com) - is a system for ordering online services operated mainly on the American market, provides the software to integrate with the various information systems and on the platform IOS.
- Appointly (http://appointy.com/) - is a system that handles online orders, functioning in the USA. It provides applications on IOS platform, Android and web page.
- Wahanda (https://wahanda.com) - is a system for ordering online services focused on cosmetic industry (among others, hairdressers, cosmetician, make-up artist) available mainly on the American market. It provides applications on IOS platform and web page.

This invention is a pioneering and unique solution on a world scale.

Range of applications of the invention is large: in addition to households it can operate in hotels, spas, shopping malls and offices - wherever it is possible to install a television with access to the Internet.

The existing online solutions allow for basic user interaction with the services available through the devices from individual suppliers, however, they do not offer any of the following: reviewing, searching, and interacting at a high level between the user and service providers in a range of fields. Our invention would offer all that.

In accordance with the invention description, the system of booking and purchasing services through a television set, which includes the server and set-top box such as Android TV which is adapted to receive a TV signal, and also to communicate with the server and the television, is characterized by the fact that it has installed on TV set-top box application capable to communicate with the user through the interface that is displayed on the television set and able to communicate with the server, making your request.

Favorably, the system includes the following components:
a. A server that performs data requested by the user.
b. The application, which is a host interface user queries and presenting the results of these inquiries by the television.

Favorably, the data includes the following components:
a. PostgreSQL database.
b. Search engine based on engine ElasticSearch;
C. Programmable API interface such as REST;

In addition, in accordance with invention, the communication application, installed on your set-top box such as Android TV is characterized by the fact that it provides you with at least the following functionality:
a. Log on to the application by:
   And. Creating new account.
      II. Using an existing account:
         - Remembering the password for your account.
      III. Using your account by linking to a Facebook account.
b. Presentation of the companies registered in the system.
C. Company Search Engine with search filters.
d. Presentation details for the selected company.
   And. The address details.
   II. Photos made available by the company.
   III. Location on the map.
   iv. Services offered.
   V. Dates availability.
   VI. Availability of individual employees within the said period.
e. Possibility of booking services for the selected date and the selected employee.
f. Possibility to bookmark the selected companies.
g. Possibility of viewing and editing of details for scheduled events.
h. Possibility of viewing and editing of personal details, including contact information.

In addition, in accordance with the invention claimed, a way of making the reservation and purchase of services, characterized by the fact that it includes the following steps is implemented using application installed in your set-top box type Android TV:
a. A connection to the application server through a decoder.
b. User log in to the application.
C. Review database search and filter companies with the possibility of location and presentation of individual businesses on the map.
d. A review of the details, including: photos, list of services, staff, the possibility of carrying out services and/or the contract in a given period.
e. Execution of the contract and/or reservation services, taking account of any relevant details, with viewing capability and possible modification or cancellation of the booking details and/or order.

### An example of implementation of the invention

The example of the invention is presented with reference to the attached photos of prototype solutions, for which:
Fig. 1 - Provides an overview of the key elements of the communication lines between two parts of the system.
Fig. 2 - Shows splash screen view shows an example application.
Fig. 3 - Shows the prototype view of the menu interface, which is divided into two parts - left-hand side is used to perform operations associated with businesses and services, while the right-hand side is more of a user interface.
Fig.4 - Shows the prototype browser interface of available businesses and basic search engine.
Fig.5 - Presents sample search result for a business nearest to you.
Fig. 6 - Shows the appearance of the advanced filter search results.
Fig.7 - Shows a sample business page that would include information about relevant services.

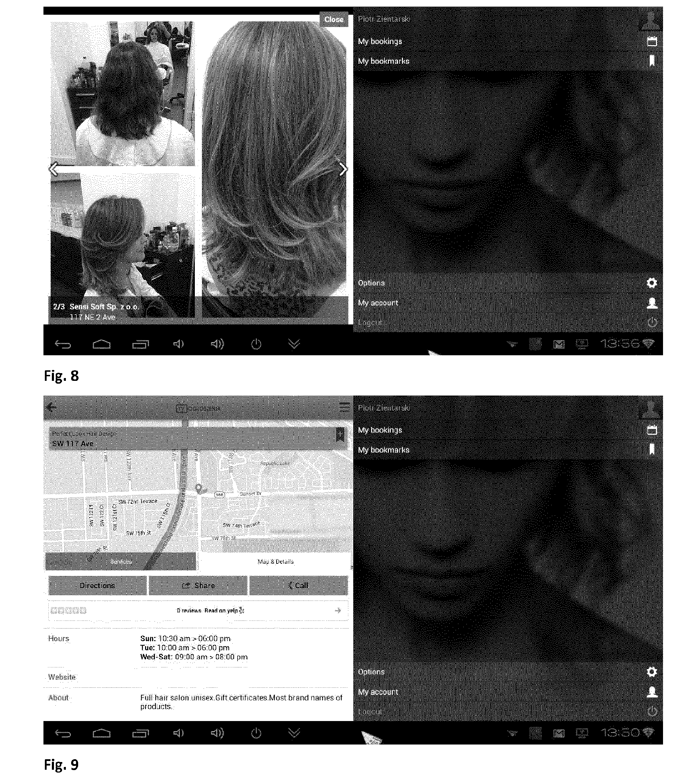

Fig. 8 - Gives an example of the photo browser, shared by the companies;
Fig. 9 - Shows a sample of a window with detailed information about the company, as well as a location map.
Fig. 10 - Shows a prototype window of the booking service, which includes advanced order options.
Fig. 11 - Shows the window containing sample order form which allows checking and confirming your order.
Fig. 12 - Shows a sample message after completion of a service order
Fig. 13 - Shows a sample overview of contracted services/scheduled visits;
Fig. 14 - Shows a window containing detailed data service you requested.
Fig. 15 And 16- Show the windows that confirm or cancel the changes made to the service order.
Fig. 17 - Shows the log on window using an account with Facebook.

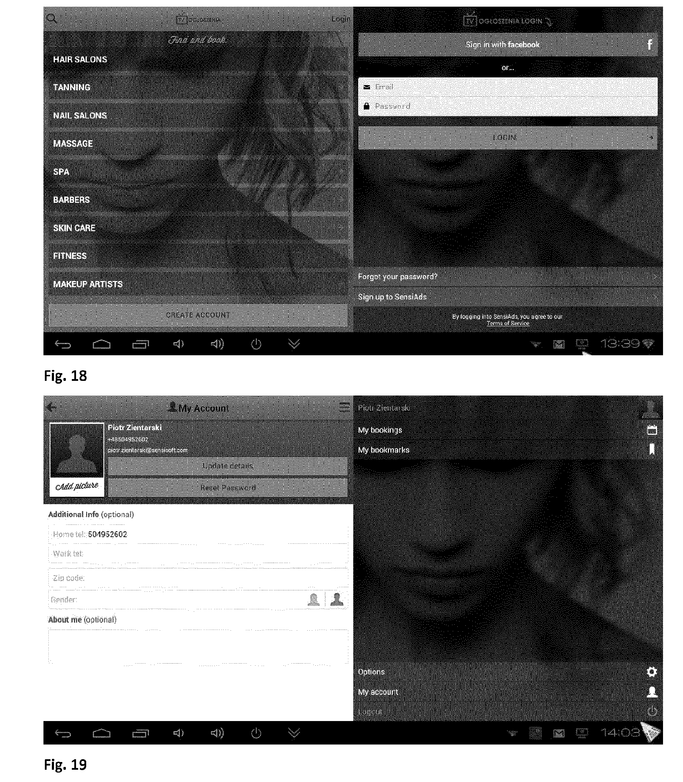

Fig. 18 - Shows the login screen to the application
Fig. 19 - Shows details of the personal account, including contact information.
Fig. 20 - Shows the appearance of the window that allows editing of personal data
Fig. 21 - Shows a sample window containing the business' tabs

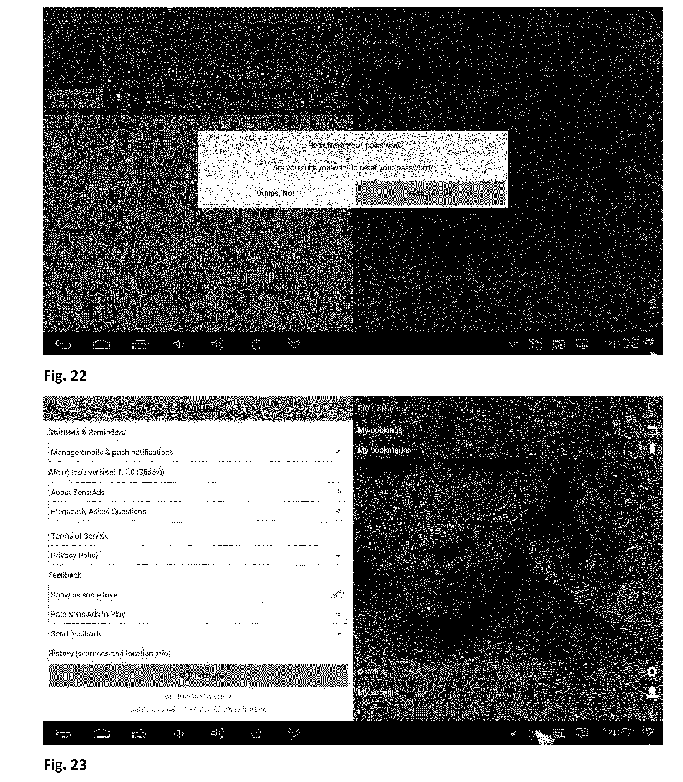

Fig. 22 - Shows a sample window confirming or aborting a password change
Fig. 23 - Shows the appearance of the window settings, to allow for personalization of individual characteristics applications

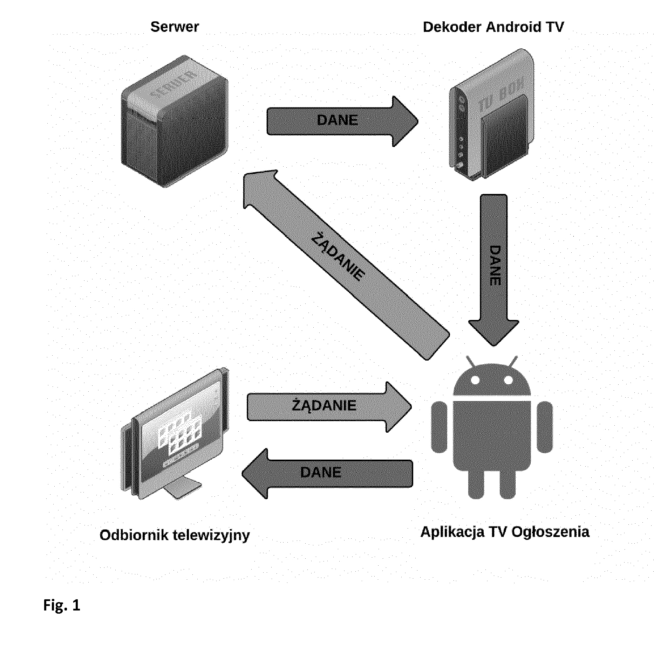

Communication and direction of data flow the user and the server is accomplished with a router such as Android TV and the correct application, in accordance with the diagram (Fig. 1). Below are the relevant features of such system according to the invention.

User log in to the application (Fig. (18) is possible by the creation of a new account or login in to the existing account, or log in to your account through a Facebook account (Figs. (17), providing the ability to review and/or change your password.

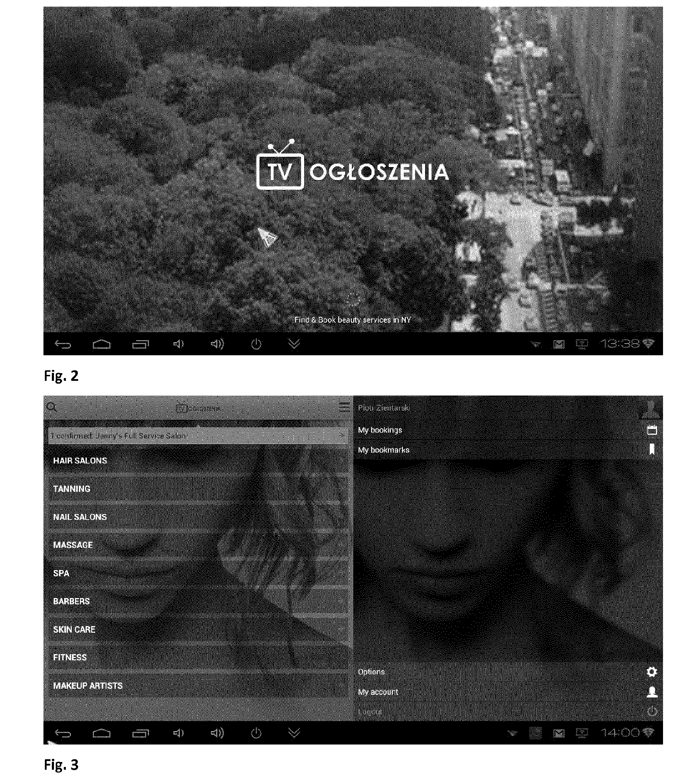

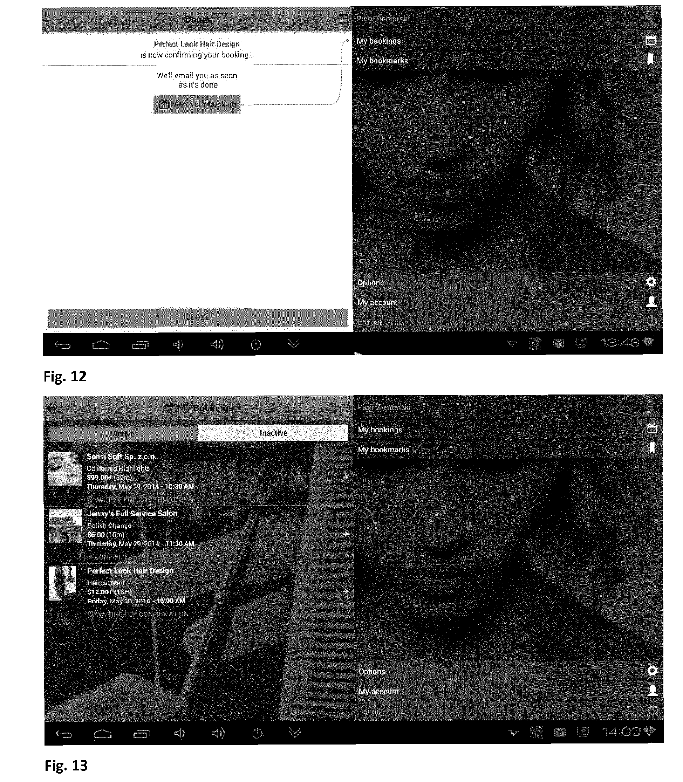

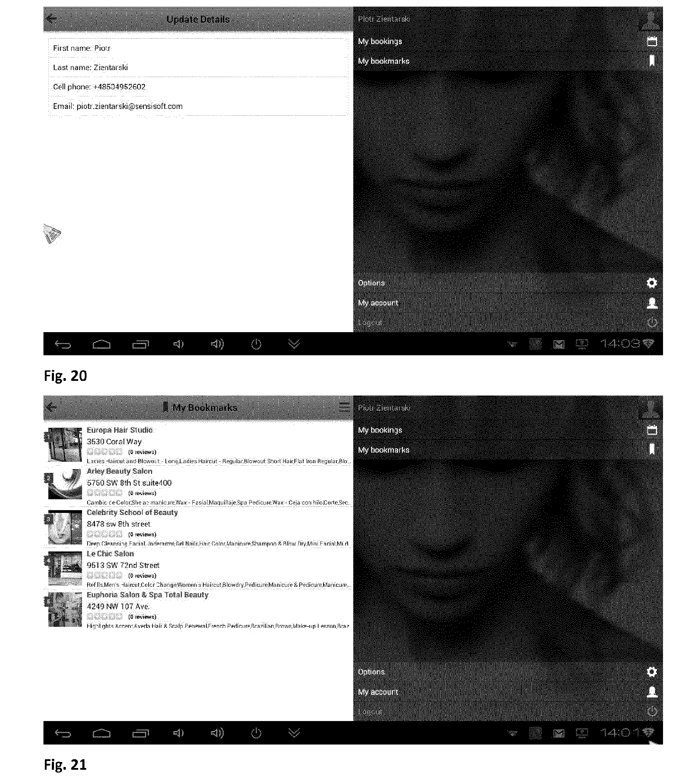

The application TV Classified Ads is positively convenient and transparent interface (Figs. 3), which can be operated from the TV remote control. The screen is divided into two parts - left enables you to perform operations related to businesses and services, while the rights is more user interface - contains references to services already booked in the view My bookings (Figs. 13), bookmarks to frequently viewed business in view My Bookmarks (Figs. 21), options in the view Options (Fig. (23) and user account details in the view My account (Figs. 20).

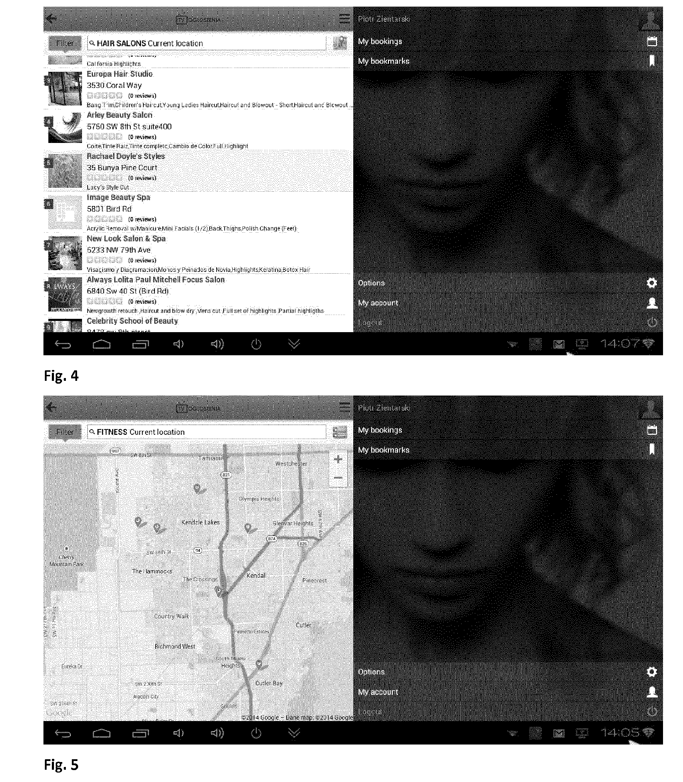

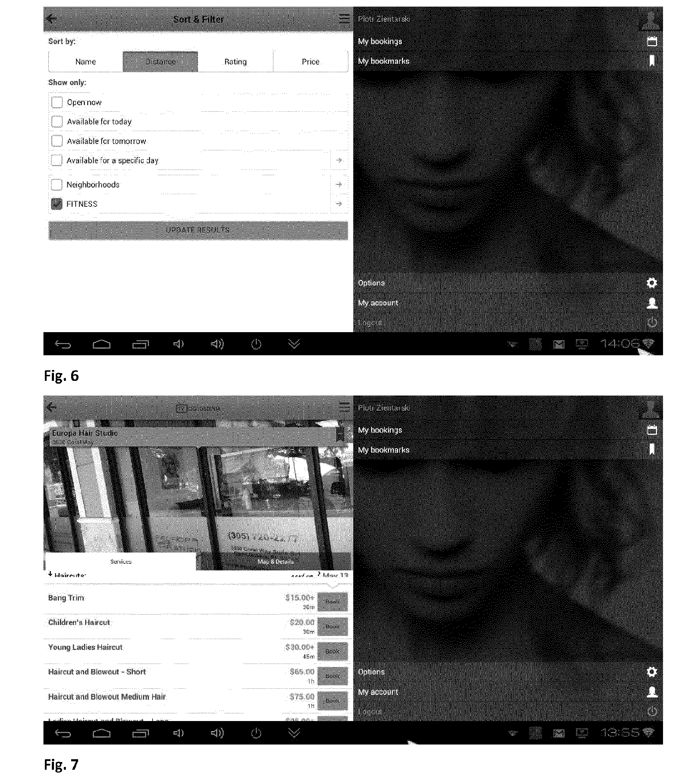

The application TV Classified Ads easily allows reviewing business database by selecting a specific service category (Fig. 3) (Figs. 4) and filter results (Figs. 6) as well as presentation and location of individual businesses on the map (Fig. 5).

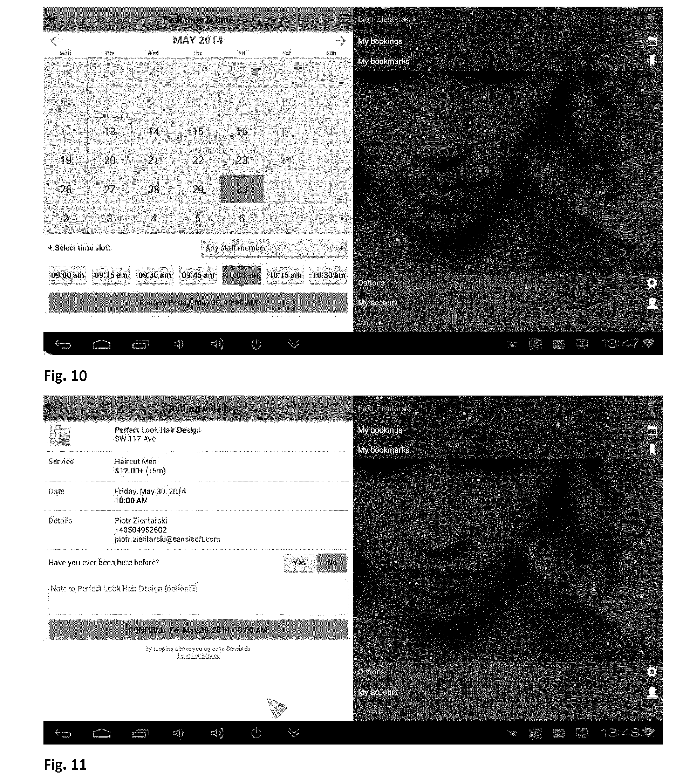

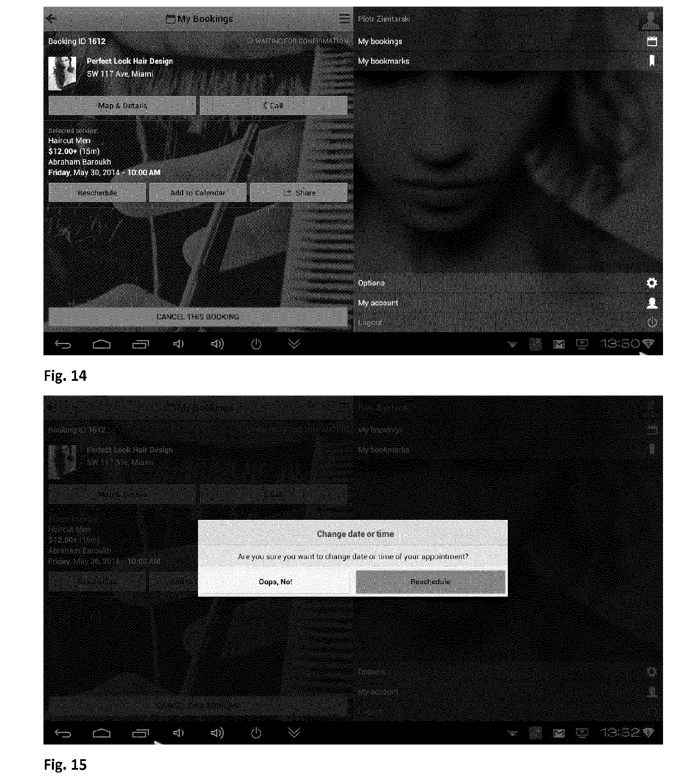

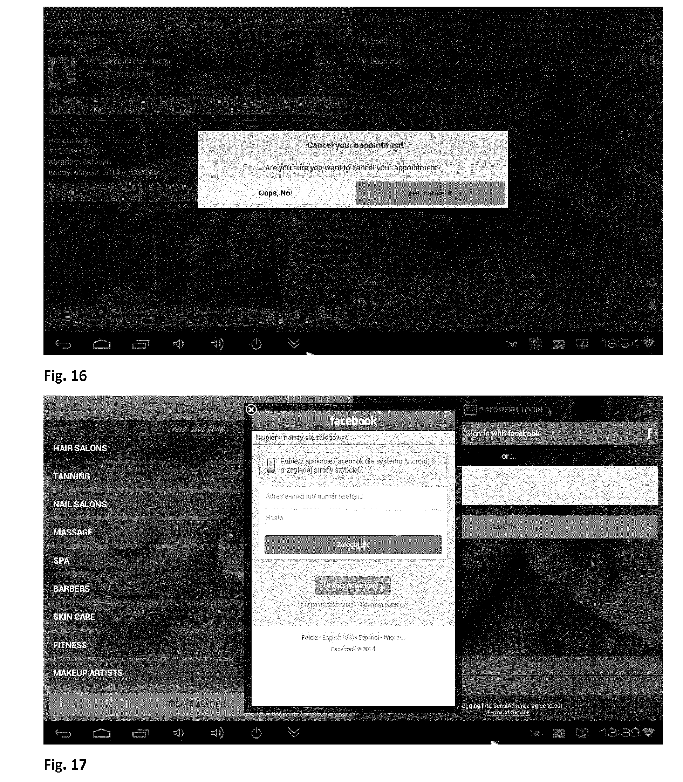

After selecting a particular business, the TV application TV Classified Ads favorably allows you to review the company specific data (Figs. (9), including the following: provided by the company pictures (Figs. (8), the list of offered services (Fig. (7), and performance of the contract and/or reservation services, taking into account any relevant details such as: date, time, person performing the service (Fig. 10 and 11), with viewing capability (Fig. 12 and 13) and of any modification or cancellation of the reservation details and/or order (Figs. 14, 15 and 16).

## Claims

1. Computer system for booking and purchasing services through a television set, which includes the server and set-top box such as Android TV which is adapted to receive a TV signal, as well as to communicate with the server and TV receiver, **characterized in that** it includes an installed on TV set-top box application capable to communicate with the user through the interface that is displayed on your television and able to communicate with the server, making your request.

2. The system according to claim 1, **characterized in that** it includes the following components:
a. A server that performs data requested by the user.
b. The application, which is a host interface accepting user queries and presenting the results of these inquiries through the television set.

3. The system according to claims 1 or 2, **characterized in that** the data server includes the following components:
a. PostgreSQL database.
b. Search engine based on engine ElasticSearch;
c. Programmable API interface such as REST;

4. A communication application installed on the set-top box, such as Android TV in a system according to claims 1, 2, or 3, **characterized in that** it provides to a user at least the following functionality:
a. Log on to the application by:
i. Creating new account.
ii. Using an existing account:
• Remembering the password for your account.
iii. Using your account by linking to a Facebook account.
b. Presentation of the companies registered in the system.
c. Company Search Engine with search filters.
d. Presentation details for the selected company.
i. The address details.
ii. Photos made available by the company.
iii. Location on the map.
iv. Services offered.
v. Availability dates.
vi. Availability of individual employees within the said period.
e. Possibility of booking services for the selected date and the selected employee.
f. Opportunity for you to add the business to your bookmarks.
g. Possibility of viewing and editing details of scheduled events.
h. Possibility of viewing and editing of personal details, including contact information.

5. A method of making transactions in the system according to claims 1, 2 or 3, especially booking and purchasing services, **characterized in that** it includes the following steps realized by the application installed in your set-top box such as Android TV:
a. A connection to the application server through a decoder.
b. User log in to the application.
c. Review database search and filter companies with the possibility of location and presentation of individual businesses on the map.
d. A review of the details, including: photos, list of services, staff, the possibility of carrying out services and/or the contract in a given period.
e. Execution of the contract and/or reservation services, taking account of any relevant details, with viewing capability and possible modification or cancellation of the booking details and/or order.
